# FASCICULE DE BREVET EUROPEEN

(11) **EP 1 672 561 B1**
(45) Date de publication et mention de la délivrance du brevet: **08.08.2012**
(21) Numéro de dépôt: 05112347.9
(22) Date de dépôt: 16.12.2005
(51) Int. Cl.: G06K 7/08, G06K 19/07, H04L 25/06, H04L 27/08, G06K 7/00

(54) **Démodulateur d'amplitude pour transpondeur électromagnétique**
Amplitudendemodulator für elektromagnetischen Transponder
Amplitude demodulator for electromagnetic transponder

(30) Priorité: 20.12.2004 FR 0453073
(43) Date de publication de la demande: 21.06.2006
(73) Titulaire: STMICROELECTRONICS S.A., 92120 Montrouge (FR)
(72) Inventeur: Conraux, Jérôme, 13530 Trets (FR)
(74) Mandataire: de Beaumont, Michel

(56) Documents cités:
- US-A- 4 494 241
- US-A- 4 754 477
- US-A- 6 031 419

## Description

### Domaine de l'invention

La présente invention concerne de façon générale les transmissions radiofréquence en modulation d'amplitude et, plus particulièrement, les transmissions effectuées avec un taux de modulation inférieur à l'unité.

Un exemple d'application de la présente invention concerne les systèmes à transpondeurs électromagnétiques dans lesquels une porteuse haute fréquence est modulée en amplitude par un terminal pour une transmission vers un transpondeur électromagnétique, par exemple porté par une étiquette électronique ou une carte à puce, dans le champ du terminal. L'invention s'applique notamment à des transpondeurs électromagnétiques dans une application de passeports électroniques.

### Exposé de l'art antérieur

Les systèmes pour transpondeurs électromagnétiques sont basés sur la coopération entre un circuit oscillant côté terminal de lecture-écriture et un circuit résonnant côté transpondeur électromagnétique (généralement un élément portable), pour échanger des informations en utilisant un champ haute fréquence rayonné par le circuit oscillant du terminal. Souvent, la porteuse haute fréquence sert également de porteuse de téléalimentation fournissant l'énergie d'alimentation du transpondeur.

Un exemple d'application de l'invention concerne les systèmes à transpondeurs basés sur des normes ISO 14443 et 15693 selon lesquels la porteuse de téléalimentation rayonnée par le terminal est de 13,56 MHz, tandis qu'une sous-porteuse de rétromodulation peut être utilisée par les transpondeurs pour émettre des informations vers le terminal avec une fréquence de 847,5 kHz. Dans le sens terminal vers borne, la porteuse est modulée en amplitude avec un taux de modulation généralement de l'ordre de 10 % avec un débit de l'ordre de 106 kilobits par seconde. Le taux de modulation se définit comme étant la différence d'amplitudes entre la transmission d'un état 1 et la transmission d'un état 0, divisée par la somme de ces amplitudes.

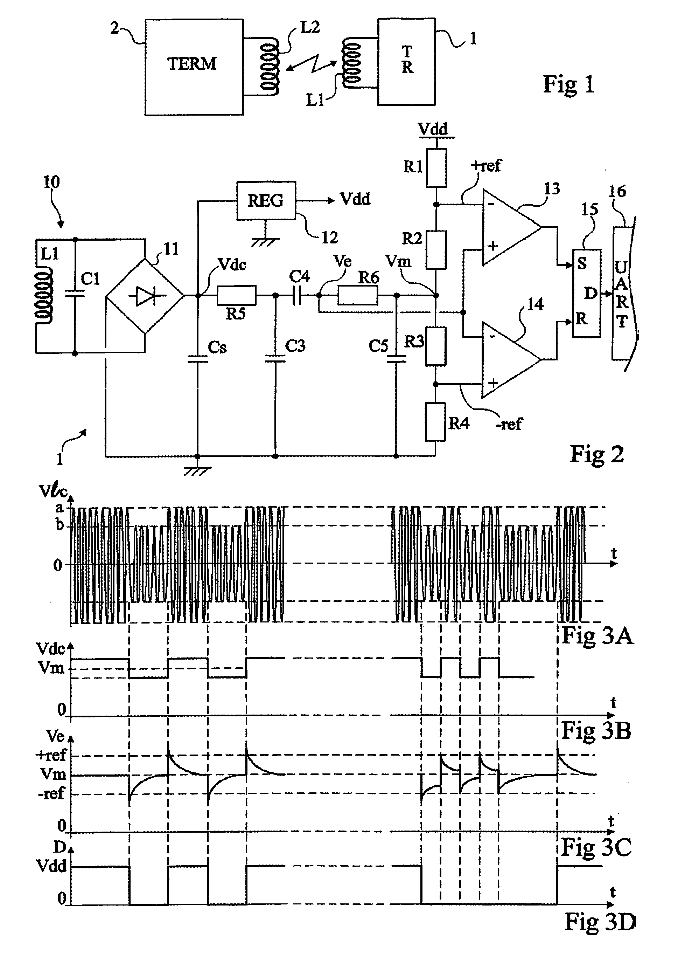

La figure 1 représente, de façon très schématique et sous forme de blocs, un exemple de système à transpondeur électromagnétique auquel s'applique l'invention. Un transpondeur 1 (TR) est destiné à être placé dans le champ électromagnétique d'un terminal 2 (TERM) dont un élément inductif L2 d'un circuit oscillant émet un rayonnement haute fréquence que capte une antenne L1 du transpondeur 1.

La figure 2 représente, de façon très schématique et en partie sous forme de blocs, un exemple d'architecture classique d'un transpondeur électromagnétique 1, destiné à communiquer avec un terminal de lecture-écriture (non représenté en figure 2). Le transpondeur comporte un circuit oscillant 10, constitué d'un élément inductif L1 formant antenne, en parallèle avec un condensateur C1 aux bornes d'entrée alternative d'un pont de redressement 11. Les bornes de sortie redressées du pont 11 sont reliées par un condensateur de stockage Cs. En variante (non représentée), le condensateur Cs est remplacé par une source de polarisation (par exemple, une source de courant ou une résistance, voire directement la charge téléalimentée).

Le signal capté lorsque le transpondeur 1 est dans le champ d'un terminal est utilisé, entre autres, pour extraire une tension d'alimentation Vdd des circuits du transpondeur, au moyen d'un régulateur 12 (REG) et pour décoder les éventuelles informations transmises par le terminal.

Pour ce faire, le transpondeur comporte un circuit de démodulation d'amplitude comportant, par exemple un filtre passe bas constitué schématiquement d'une résistance R5 et d'un condensateur C3, une borne de la résistance R5 étant connectée au point commun du condensateur Cs et d'une des bornes de sortie du pont 11 (et reçoit ainsi la tension redressée et filtrée Vdc), tandis que son autre borne est connectée au point commun entre le condensateur C3 dont l'autre électrode est connectée à la masse, et un condensateur C4 filtrant la composante continue pour fournir sur son autre électrode un signal Ve ne contenant que les fronts de la tension Vdc. La fréquence de coupure du filtre passe haut (condensateur C4) est choisie pour laisser passer sans affaiblissement notable les données binaires modulées en amplitude sur la porteuse. De plus, le condensateur Cs participe à un filtrage passe-bas tel que la tension redressée et filtrée Vdc porte l'enveloppe du signal modulé en amplitude.

Le signal Ve est appliqué sur une première borne d'un élément résistif R6, dont l'autre borne est reliée à la masse par un condensateur C5. Le signal Ve est par ailleurs appliqué à des premières entrées respectives (par exemple, non inverseuse et inverseuse) de deux comparateurs 13 et 14 à deux seuils +ref et -ref. Les seuils +ref et -ref sont obtenus par un pont diviseur constitué, par exemple, de quatre éléments résistifs R1, R2, R3 et R4 en série entre deux bornes d'application de la tension Vdd, le point milieu entre les résistances R1 et R2 fournissant la tension +ref, le point milieu entre les résistances R2 et R3 fournissant une tension moyenne Vm à la deuxième borne de la résistance R6, et le point milieu entre les résistances R3 et R4 fournissant le niveau -ref. La tension moyenne Vm dépend des plages de fonctionnement des comparateurs 13 et 14 et/ou des circuits avals. Dans l'exemple, la tension moyenne correspond à la moitié Vdd/2 de la tension d'alimentation.

Le pont diviseur et la résistance R6 permettent de fixer une composante continue à la valeur Vm pour le signal Ve ne portant que les fronts de modulation.

Les sorties des comparateurs 13 et 14 sont reliées aux entrées S de mise à 1 et R de remise à zéro respectives d'une bascule 15 de type RS dont la sortie D fournit l'état détecté (démodulé) à un circuit d'interprétation numérique 16 (par exemple une unité arithmétique et logique UART) .

Un démodulateur tel que représenté en figure 2 est décrit, par exemple, dans le brevet américain N° 6 031 419.

Pour simplifier la représentation de la figure 2, on a tenu compte uniquement de la partie réception du transpondeur. En particulier, les éléments de rétromodulation de la charge constituée par le transpondeur dans le champ électromagnétique d'un terminal pour une transmission dans le sens transpondeur vers terminal n'ont pas été représentés. De plus, un signal (non représenté) est prélevé directement sur le circuit oscillant 10 du transpondeur pour détecter la présence d'un signal radio fréquence et extraire une horloge de la porteuse.

Les figures 3A, 3B, 3C et 3D sont des chronogrammes illustrant le fonctionnement du démodulateur représenté en figure 2. La figure 3A représente un exemple d'allure d'un signal Vlc aux bornes du circuit oscillant 10 reçu d'un terminal. La figure 3B illustre l'allure du signal Vdc en sortie du pont redresseur 11. La figure 3C illustre l'allure du signal Ve appliqué sur les entrées de comparaison des comparateurs 13 et 14 et les seuils -ref et +ref de comparaisons fixées par les résistances R1, R2, R3 et R4. La figure 3D illustre le résultat fourni par la sortie D de la bascule 15.

Comme l'illustrent les parties gauches de ces figures, le signal redressé Vdc se trouve en principe au-dessus ou en dessous de sa valeur moyenne Vm selon l'état 1 ou 0 du bit transmis. Le condensateur C4 filtre la composante continue, de sorte que le signal Ve appliqué sur les entrées de comparaison des comparateurs 13 et 14 ne comporte, autour de la valeur Vm, que les fronts lors des changements d'état. Les comparateurs détectent quand le signal sort de la fenêtre définie par les seuils -ref et +ref, et la bascule 15 fournit un état 0 ou 1 selon le sens du front détecté.

Un problème se pose si l'on souhaite augmenter le débit de transmission en modulation d'amplitude dans le sens terminal vers transpondeur. Ce problème est illustré par la partie droite des chronogrammes des figures 3A à 3D. Les changements d'état de l'enveloppe du signal reçu autour de la valeur Vm (figure 3B) sont plus rapprochés qu'en partie gauche des chronogrammes.

Comme l'illustre la figure 3C, le signal Ve n'a pas le temps de revenir à la valeur médiane Vm avant l'apparition du front suivant du signal modulé. Comme seuls les fronts sont transmis par le condensateur C4 et que l'amplitude de ces fronts dépend du taux de modulation, le système devient incapable de détecter les commutations ultérieures tant que l'état n'a pas été maintenu pendant un temps suffisant pour permettre au signal Ve de retrouver la valeur de repos Vm.

Cet inconvénient fait que les transpondeurs sont, en pratique, limités à des débits de 100 à 400 kbits/s. Or, de plus en plus d'applications requièrent des débits plus importants (par exemple, les passeports électroniques pour la transmission de données biométriques ou les transpondeurs multi applications) .

Réduire la fenêtre de détection fixée par les seuils -ref et +ref ne constitue pas une solution à ce problème dans la mesure où le démodulateur deviendrait trop sensible au bruit. Résumé de l'invention

La présente invention vise à pallier tout ou partie des inconvénients des démodulateurs connus traitant des fronts d'un signal en modulation d'amplitude centrés sur une composante continue.

L'invention vise plus particulièrement à permettre une accélération des débits de transmission de données en modulation d'amplitude dans des systèmes à taux de modulation inférieur à l'unité.

L'invention vise également à proposer une solution ne nécessitant aucune modification côté terminal.

Pour atteindre tout ou partie de ces objets ainsi que d'autres, la présente invention prévoit un démodulateur d'amplitude comportant au moins :
un élément capacitif de filtrage d'une première composante continue d'un signal modulé en amplitude ;
un élément de détection de fronts dans le signal issu de l'élément capacitif ; et
au moins un élément de commutation pour forcer, au moins après détection d'un front, le retour du signal issu de l'élément capacitif à une deuxième composante continue.

Selon un mode de réalisation de la présente invention, un élément de filtrage est présent en amont dudit élément capacitif pour fournir une enveloppe du signal modulé en amplitude.

Selon un mode de réalisation de la présente invention, un élément résistif fournit ladite deuxième composante continue au signal issu de l'élément capacitif.

Selon un mode de réalisation de la présente invention, ledit élément de commutation est constitué d'un interrupteur court-circuitant ledit élément résistif.

Selon un mode de réalisation de la présente invention, ledit élément de commutation est constitué d'un réseau de capacités commutées.

Selon un mode de réalisation de la présente invention, ledit élément de détection comporte au moins deux éléments de comparaison de l'amplitude du signal à interpréter par rapport à deux valeurs encadrant ladite deuxième composante continue.

Selon un mode de réalisation de la présente invention, l'élément de commutation est commandé par un circuit détectant un changement d'état de la sortie d'un des comparateurs.

Selon un mode de réalisation de la présente invention, l'élément de commutation est constitué d'au moins un interrupteur ouvrant une branche de connexion de l'élément capacitif à des entrées de comparaison desdits comparateurs.

Selon un mode de réalisation de la présente invention, ladite deuxième composante continue correspond à la moitié de la tension d'alimentation du démodulateur.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 qui a été décrite précédemment, représente de façon très schématique et sous forme de blocs, un exemple de système à transpondeur électromagnétique du type auquel s'applique préférentiellement la présente invention ;
la figure 2 qui a été décrite précédemment représente partiellement, de façon très schématique et sous forme de blocs, un exemple d'architecture classique d'un transpondeur électromagnétique ;
les figures 3A, 3B, 3C et 3D qui ont été décrites précédemment illustrent le fonctionnement du démodulateur de la figure 2 ;
la figure 4 représente, de façon partielle et sous forme de blocs, un mode de réalisation d'un démodulateur d'amplitude selon la présente invention ;
les figures 5A, 5B et 5C illustrent par des chronogrammes le fonctionnement du démodulateur de la figure 4 ; et
la figure 6 illustre de façon partielle une variante de l'invention.

### Description détaillée

De mêmes éléments ont été désignés par de mêmes références aux différentes figures. Par souci de clarté, seuls les éléments nécessaires à la compréhension de l'invention ont été représentés et seront décrits par la suite. En particulier, les structures respectives des systèmes numériques (microprocesseur ou logique câblée) d'interprétation des données transmises n'ont pas été détaillées, l'invention étant compatible avec les systèmes classiques.

La présente invention sera décrite par la suite en relation avec un exemple d'application préféré aux transpondeurs électromagnétiques. On notera toutefois qu'elle s'applique plus généralement à tout système de transmission, notamment radiofréquence, en modulation d'amplitude.

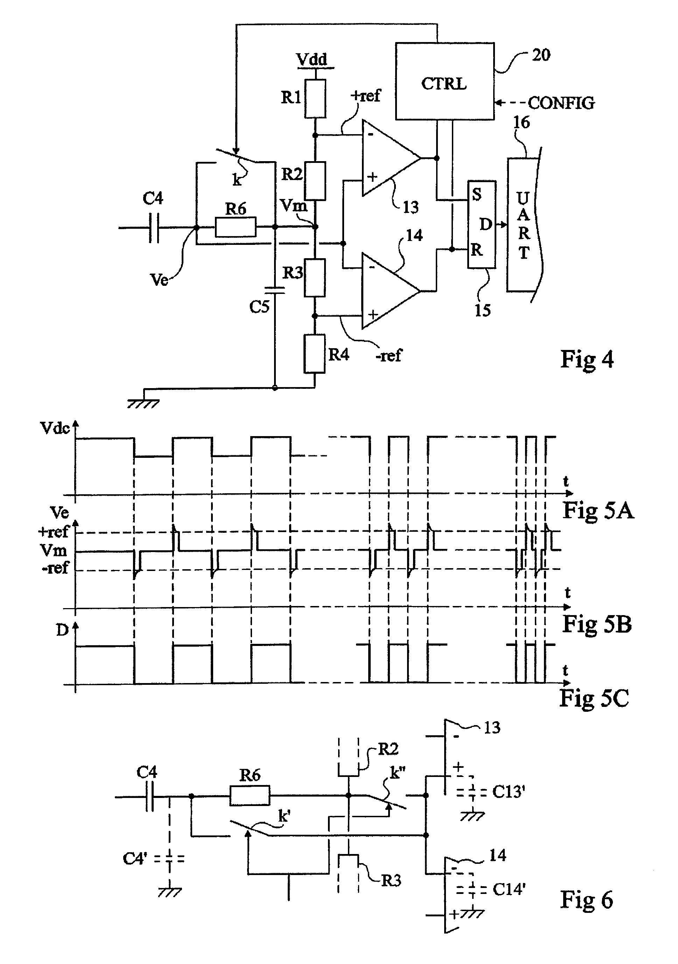

La figure 4, représente, de façon schématique et sous forme de blocs, une partie d'un démodulateur d'amplitude selon un mode de réalisation de la présente invention. Pour simplifier, la partie du transpondeur en amont du condensateur C4 fournissant des fronts d'un signal modulé en amplitude redressé par un pont (11, figure 2) n'a pas été représentée. De même, les autres constituants du transpondeur comme le régulateur de tension, le générateur d'horloge et le détecteur de signaux radiofréquence n'ont pas été représentés.

Comme précédemment, la tension Ve comprenant les fronts de changements d'état de la modulation d'amplitude est centrée sur un niveau Vm fixé par un pont diviseur (par exemple, un pont diviseur constitué de résistances R1, R2, R3 et R4), une résistance R6 reliant l'électrode du condensateur C4 au point milieu des résistances R2 et R3. Toujours comme précédemment, un condensateur C5 relie la borne de la résistance R6 opposée au condensateur C4 à la masse et deux comparateurs 13 et 14 reçoivent sur leurs entrées de comparaison respectives (par exemple, non inverseuse et inverseuse) le signal Ve, et sur des entrées de référence respectives (par exemple, inverseuse et non inverseuse) des niveaux +ref et -ref définissant la fenêtre de détection du démodulateur. Les sorties des comparateurs 13 et 14 sont reliées aux entrées respectives S de mise à 1 et R de remise à zéro d'une bascule R15 dont la sortie D fournit l'état détecté à un circuit 16 d'interprétation numérique (par exemple, une unité arithmétique et logique, UART). On suppose que les résistances R1 et R4 ont la même valeur et que les résistances R2 et R3 ont la même valeur de sorte que le niveau Vm correspond à Vdd/2 et est centré entre les niveaux de référence -ref et +ref. Toutefois, cela n'est pas obligatoire, par exemple, si on souhaite adapter ces niveaux à une différence de sensibilité des comparateurs selon le sens de basculement.

Selon le mode de réalisation préféré de l'invention illustré par la figure 4, un interrupteur K est connecté en parallèle sur la résistance R6 pour la court-circuiter sous commande d'un circuit 20 (CTRL) et ramener ainsi immédiatement la composante continue de la tension Ve à la valeur médiane Vm fixée par le pont diviseur. Le circuit 20 commande la fermeture de l'interrupteur K après qu'un front ait été détecté par l'un des comparateurs 13 ou 14. Pour cela, le circuit 20 a deux entrées de détection reliées aux sorties respectives des comparateurs 13 et 14 et fournit un signal de commande à l'interrupteur K. La fermeture de l'interrupteur K par le circuit 20 est impulsionnelle et de durée choisie en fonction du temps nécessaire pour ramener le signal Ve au niveau Vm de la composante continue côté comparateurs. De façon simplifiée, la durée des impulsions est choisie la plus courte possible de façon à ne pas retarder la remise en fonctionnement possible du démodulateur quel que soit le débit de transmission.

Les figures 5A, 5B et 5C illustrent, par des chronogrammes, le fonctionnement du démodulateur de la figure 4. La figure 5A représente l'enveloppe redressée Vdc du signal reçu (sortie du pont 11, figure 2). La figure 5B illustre la tension Ve correspondante et la figure 5C illustre la sortie de données D de la bascule 15.

Comme l'illustre la figure 5B, dès qu'un front est détecté par l'un des comparateurs 13 et 14, la sortie D de la bascule change d'état selon le sens du front détecté. Lorsque le front décroît avec une forme (décharge capacitive) telle qu'illustrée par la figure 3C décrite précédemment, et que le comparateur correspondant bascule de nouveau (c'est-à-dire que le seuil +ref ou -ref est atteint dans l'autre sens), le circuit 20 provoque la fermeture de l'interrupteur K, ce qui ramène immédiatement la tension Ve au niveau Vm. Le démodulateur est alors réinitialisé et peut fonctionner correctement pour l'interprétation du front suivant.

Les parties droites des figures 5A, 5B et 5C montrent qu'avec une commande identique de l'interrupteur K, le débit peut être accéléré par rapport au cas classique.

Selon une variante de réalisation non représentée, la durée des impulsions de fermeture de l'interrupteur K est adaptée au débit attendu, par exemple, au moyen d'un signal de configuration CONFIG reçu par le circuit 20 et provenant du microprocesseur 16. Une telle variante permet, entre autres, d'optimiser la consommation d'énergie en adaptant le fonctionnement du circuit de commutation de l'invention en fonction de ce qui est nécessaire.

Un autre avantage de cette variante est qu'en adaptant la durée des périodes où le potentiel du signal Ve est forcé à l'état de repos, on élimine d'éventuels bruits engendrant de fausses détections. En quelque sorte, on définit une fenêtre de fonctionnement du détecteur de fronts autour des instants attendus pour les fronts représentant des données.

Selon une autre variante de réalisation, le circuit 20 déclenche la fermeture de l'interrupteur K dès qu'il détecte un changement d'état d'un des comparateurs 13 et 14. Cela accélère encore la réinitialisation du démodulateur. Dans ce cas, on utilise les retards de propagation dans le circuit 20 pour garantir une détection correcte des états par la bascule 15. En effet, il ne faut pas que la fermeture de l'interrupteur K intervienne trop tôt après l'apparition d'un front sur le signal Ve, faute de quoi la bascule 15 ne pourrait pas détecter correctement la donnée. L'adaptation du circuit pour respecter un tel fonctionnement est à la portée de l'homme du métier.

Selon une autre variante de réalisation de l'invention, la résistance R6 est supprimée et l'interrupteur K gère directement l'ajout de la composante continue du signal Ve périodiquement. Le cas échéant, cet interrupteur est remplacé par un réseau de capacités commutées ramenant le niveau Vm sur le signal Ve sous la forme d'une précharge. Il pourra s'agir de tout autre circuit propre à ramener la composante continue Vm sur l'électrode du condensateur C4 reliée aux entrées de mesure des comparateurs 13 et 14.

La figure 6 représente, de façon partielle, une variante de l'invention dans laquelle, au lieu de court-circuiter la résistance R6, on ouvre au moyen d'un interrupteur K' la liaison de l'électrode du condensateur C4 aux entrées de comparaison des comparateurs 13 et 14. Cette variante exploite les capacités parasites C4', C13' et C14' reliant respectivement le condensateur C4 à la masse et les entrées de mesures des comparateurs 13 et 14 à la masse. Ces capacités parasites sont en effet celles qui conditionnent le temps de remise à l'état moyen Vm du niveau Ve. En ouvrant l'interrupteur K' lorsqu'un état est détecté, on diminue la valeur des capacités parasites connectées au noeud fournissant le signal Ve et on accélère ainsi sa décharge vers le niveau Vm.

De préférence, un deuxième interrupteur K" est intercalé entre le point milieu des résistances R2 et R3 (donc le point au niveau Vm) et les entrées communes de référence des comparateurs 13 et 14 pour éviter de laisser ces entrées flottantes. La commande du commutateur K" est inversée par rapport à celle du commutateur K'.

Un avantage de la présente invention est qu'elle permet d'accroître le débit de transmission dans le sens terminal vers transpondeur.

Un autre avantage de l'invention est qu'elle ne nécessite aucune modification des terminaux existants.

Un autre avantage de l'invention est qu'elle ne requiert pas d'augmenter la sensibilité des comparateurs, donc leur consommation.

Un autre avantage induit par l'invention est qu'elle permet d'augmenter les valeurs des résistances R1, R2, R3 et R4 pour diminuer la consommation du pont fixant les références de comparaison dans la mesure où ce pont n'a plus besoin d'injecter du courant dans la résistance R6 pour ramener le niveau du signal Ve au niveau Vm.

Bien entendu, la présente invention est susceptible de diverses variantes et modifications qui apparaîtront à l'homme de l'art. En particulier, la réalisation pratique du circuit 20 de commande de l'interrupteur K pour respecter les fonctionnalités décrites est à la portée de l'homme du métier. Par exemple, la durée des impulsions de fermeture de l'interrupteur K (ou d'ouverture des interrupteurs K' et K") suite à chaque détection de front pourra être fixée par des éléments analogiques (cellule RC) ou à partir de l'horloge récupérée par le transpondeur sur la porteuse.

De plus, bien que l'invention ait été décrite en relation avec une structure particulière de démodulateur, elle est transposable sans difficulté et s'applique à tout démodulateur basé sur un élément (C4) filtrant une composante continue côté antenne pour ne conserver que les fronts de l'enveloppe et ajoutant une composante continue à ces fronts. Par exemple, les deux comparateurs, la bascule et le pont diviseur fixant les références de comparaison pourront être remplacés par tout circuit de détection de fronts (y compris ne détectant pas le sens des fronts et une machine d'états gérant la consécutivité des fronts ou utilisant une horloge et une référence initiale pour interpréter les données à partir des changement d'états successifs).

En outre, la transposition de l'invention à une autre application que des transpondeurs électromagnétiques (téléalimentés ou non) est également à la portée de l'homme du métier.

Enfin, bien que l'invention que ait été décrite en utilisant un vocabulaire correspondant plus à une réalisation matérielle, la mise en oeuvre pourra faire appel partiellement à des moyens logiciels.

## Revendications

1. Démodulateur d'amplitude comportant au moins :
un élément capacitif (C4) de filtrage d'une première composante continue d'un signal modulé en amplitude redressé avec un taux de modulation inférieur à l'unité ; et
un élément (13, 14, 15) de détection de fronts dans le signal issu de l'élément capacitif,
**caractérisé en ce qu'**il comporte au moins un élément de commutation (K, K') pour forcer, au moins après détection d'un front, le retour du signal issu de l'élément capacitif à une deuxième composante continue (Vm).

2. Démodulateur selon la revendication 1, dans lequel un élément de filtrage (Cs) est présent en amont dudit élément capacitif pour fournir une enveloppe (Vdc) du signal modulé en amplitude.

3. Démodulateur selon la revendication 1, dans lequel un élément résistif (R6) fournit ladite deuxième composante continue (Vm) au signal issu de l'élément capacitif.

4. Démodulateur selon la revendication 3, dans lequel ledit élément de commutation est constitué d'un interrupteur (K) court-circuitant ledit élément résistif (R6).

5. Démodulateur selon la revendication 1, dans lequel ledit élément de commutation est constitué d'un réseau de capacités commutées.

6. Démodulateur selon la revendication 1, dans lequel ledit élément de détection comporte au moins deux éléments de comparaison (13, 14) de l'amplitude du signal à interpréter par rapport à deux valeurs encadrant ladite deuxième composante continue (Vm).

7. Démodulateur selon la revendication 6, dans lequel l'élément de commutation (K) est commandé par un circuit (20) détectant un changement d'état de la sortie d'un des comparateurs (13, 14).

8. Démodulateur selon la revendication 1, dans lequel l'élément de commutation est constitué d'au moins un interrupteur (K') ouvrant une branche de connexion de l'élément capacitif (C4) à des entrées de comparaison desdits comparateurs (13, 14).

9. Démodulateur selon la revendication 1, dans lequel ladite deuxième composante continue (Vm) correspond à la moitié de la tension d'alimentation (Vdd) du démodulateur.

## Claims

1. An amplitude demodulator comprising at least:
a capacitive element (C4) for filtering a first D.C. component of a rectified amplitude-modulated signal with a modulation index smaller than one;
an element (13, 14, 15) for detecting edges in the signal provided by the capacitive element; and
**characterized in that** it comprises at least one switching element (K, K') for forcing, at least after detection of an edge, the returning of the signal provided by the capacitive element to a second D.C. component (Vm).

2. The demodulator of claim 1, wherein a filtering element (Cs) is present upstream of said capacitive element to provide an envelope (Vdc) of the amplitude-modulated signal.

3. The demodulator of claim 1, wherein a resistive element (R6) provides said second D.C. component (Vm) to the signal provided by the capacitive element.

4. The demodulator of claim 3, wherein said switching element is formed of a switch (K) short-circuiting said resistive element (R6).

5. The demodulator of claim 1, wherein said switching element is formed of a network of switched capacitances.

6. The demodulator of claim 1, wherein said detection element comprises at least two elements (13, 14) for comparing the amplitude of the signal to be interpreted with respect to two values surrounding said second D.C. component (Vm) .

7. The demodulator of claim 6, wherein the switching element (K) is controlled by a circuit (20) detecting a state switching of the output of one of the comparators (13, 14).

8. The demodulator of claim 1, wherein the switching element is formed of at least one switch (K') opening a branch of connection of the capacitive element (C4) to comparison inputs of said comparators (13, 14).

9. The demodulator of claim 1, wherein said second D.C. component (Vm) corresponds to half the supply voltage (Vdd) of the demodulator.

## Patentansprüche

1. Ein Amplitudendemodulator, der wenigstens Folgendes aufweist:
ein kapazitives Element (C4) zum Filtern einer ersten DC Komponente eines gleichgerichteten amplitudenmodulierten Signals mit einem Modulationsindex kleiner als eins;
ein Element (13, 14, 15) zum Detektieren von Kanten in dem Signal, das von dem kapazitiven Element bereitgestellt wird; und
**dadurch gekennzeichnet ist, dass** er wenigstens ein Schaltelement (K, K') aufweist, zum Erzwingen, wenigstens nach dem Detektieren einer Kante, der Rückkehr des Signals, das von dem kapazitiven Element bereitgestellt wird, zu einer zweiten DC Komponente (Vm).

2. Der Demodulator nach Anspruch 1, wobei ein Filterelement (Cs) stromaufwärts des kapazitiven Elements anwesend ist, um eine Einhüllende (Vdc) des amplitudenmodulierten Signals bereitzustellen.

3. Der Demodulator nach Anspruch 1, wobei ein Widerstandselement (R6) die zweite DC Komponente (Vm) dem Signal bereitstellt, das von dem kapazitiven Element bereitgestellt wird.

4. Der Demodulator nach Anspruch 3, wobei das Schaltelement aus einem Schalter (K) gebildet ist, der das Widerstandselement (R6) kurzschließt.

5. Der Demodulator nach Anspruch 1, wobei das Schaltelement aus einem Netzwerk von geschalteten Kapazitäten gebildet ist.

6. Der Demodulator nach Anspruch 1, wobei das Detektionselement wenigstens zwei Elemente (13, 14) aufweist, zum Vergleichen der Amplituden des Signals, das zu interpretieren ist, bezüglich zwei Werten, die die zweite DC Komponente (Vm) umgeben.

7. Der Demodulator nach Anspruch 6, wobei das Schaltelement (K) durch einen Schaltkreis (20) gesteuert wird, der ein Umschalten eines Zustands des Ausgangs von einem der Vergleicher (13, 14) detektiert.

8. Der Demodulator nach Anspruch 1, wobei das Schaltelement aus wenigstens einem Schalter (K') gebildet wird, der einen Verbindungszweig des kapazitiven Elements (C4) öffnet, um Eingänge der Vergleicher (13, 14) zu vergleichen.

9. Der Demodulator nach Anspruch 1, wobei die zweite DC Komponente (Vm) der halben Versorgungsspannung (Vdd) des Demodulators entspricht.
